Europäisches Patentamt

European Patent Office

Office européen des brevets

(19)

(11) Veröffentlichungsnummer: **0 066 030**
**B1**

(12) # EUROPÄISCHE PATENTSCHRIFT

(45) Veröffentlichungstag der Patentschrift:
27.08.86

(21) Anmeldenummer: 81710020.9

(22) Anmeldetag: 29.05.81

(51) Int. Cl.⁴: **G 01 B 11/30**

(54) **Verfahren und Vorrichtung zur interferometrischen Ebenheitsmessung.**

(43) Veröffentlichungstag der Anmeldung:
08.12.82 Patentblatt 82/49

(45) Bekanntmachung des Hinweises auf die Patenterteilung:
27.08.86 Patentblatt 86/35

(84) Benannte Vertragsstaaten:
DE FR GB

(56) Entgegenhaltungen:
DE - A - 2 100 304
DE - A - 2 500 798
DE - B - 2 139 836
DE - B - 2 537 162
DE - B - 2 622 787
DE - B - 2 636 211
DE - B - 2 636 498
US - A - 3 439 988
US - A - 3 907 438
US - A - 3 943 278
US - A - 4 070 683

IBM TECHNICAL DISCLOSURE BULLETIN, Band 12, Nr. 10, März 1970, Seite 1643 New York, U.S.A. R.W. HARRISON: "Optical flatness technique with adjustable resolution"

(73) Patentinhaber: **IBM DEUTSCHLAND GMBH, Pascalstrasse 100, D-7000 Stuttgart 80 (DE)**
(84) Benannte Vertragsstaaten: **DE**

(73) Patentinhaber: **International Business Machines Corporation, Old Orchard Road, Armonk, N.Y. 10504 (US)**
(84) Benannte Vertragsstaaten: **FR GB**

(72) Erfinder: **Järisch, Walter, Dr., Finkenweg 15, D-7030 Böblingen (DE)**
Erfinder: **Makosch, Günter, Stuttgarter Strasse 40, D-7032 Sindelfingen 6 (DE)**
Erfinder: **Schmackpfeffer, Arno, Dr., Bergamastrasse 29, D-7030 Böblingen (DE)**

(74) Vertreter: **Teufel, Fritz, Dipl.-Phys., IBM Deutschland GmbH. Europäische Patentdienste Postfach 265, D-8000 München 22 (DE)**

## Beschreibung

Die Erfindung betrifft ein Verfahren zur Ermittlung der ersten und zweiten Ableitung einer im wesentlichen ebenen Messobjektfläche als Funktion des Ortes auf dieser Fläche und eine Vorrichtung zur Durchführung des Verfahrens.

Auf vielen Gebieten der Forschung und der Technik sind Messverfahren erforderlich, die bei geringem technischem Aufwand und bei geringen Anforderungen an die Geschicklichkeit und Konzentration der Bedienungspersonen in rascher Folge Messungen von Steigerungen einer Oberfläche mit einer Genauigkeit von Bruchteilen von Bogensekunden möglich machen.

Bei einem aus der US-PS 3 439 988 bekannt gewordenen Verfahren werden Linien oder Gitter über die als Spiegel dienende, zu untersuchende Oberfläche auf einen in grosser Entfernung angeordneten Schirm abgebildet, der im Falle eines gewünschten Auflösungsvermögens für Unebenheiten der Oberfläche in der Grössenordnung von einigen μm in einem Abstand von etwa 20 bis 30 m vom Objekt angeordnet sein muss. Abgesehen davon, dass bei der Auswertung der Messergebnisse die Verzerrungen der Gitterabbildung nur schwer mit den Beträgen, Richtungen und Orten der einzelnen Unebenheiten der Objektfläche korreliert werden können ist eine an sich theoretisch mögliche Steigerung des Auflösungsvermögens durch weitere Verlängerung des abbildenden Strahlenganges nicht möglich, da die selbst bei grösster Sorgfalt nicht ganz vermeidbaren Luftturbulenzen im Verlauf des Lichtweges unerträgliche Störungen verursachen würden. Schon bei Lichtweglängen von 20 m ist der Raumbedarf derartiger Vorrichtungen so gross, dass ein Einsatz des Verfahrens nur in Ausnahmefällen möglich ist. Ausserdem sind die Anforderungen an die Konstanz der Temperatur und an die Turbulenzfreiheit der diesen Raum erfüllenden Luft nur sehr schwer zu erfüllen.

Die bei den bekannten Interferenz- und Moiré-Verfahren, wie sie beispielsweise in den Druckschriften DE-OS 2 100 304, DE-AS 2 139 836, DE-AS 2 622 787, DE-OS 2 500 798, DE-AS 2 636 498, DE-AS 2 636 211 und DE-AS 2 537 162 beschrieben werden, auftretenden Linien sind Isohypsen, d.h. Linien, die alle Punkte gleicher Höhe verbinden. Dabei können Aussagen über die Beträge der Steigungen in den einzelnen Flächenbereichen nur durch eine Vermessung der Linienabstände erhalten werden. So wird in der DE-OS 2 100 304 ein Verfahren beschrieben, bei dem mit Hilfe von zwei Gittern, drei abbildenden optischen Systemen, einem als Lummerwürfel ausgebildeten Strahlenteiler und zwei Photozellen eine Aussage über die integrierte Rauhigkeit des im Objektfeld befindlichen Objektbereiches erhalten werden kann. Angaben über den Verlauf des Oberflächenprofils in den einzelnen Teilbereichen oder Punkten der im Objektfeld befindlichen Objektfläche können mit diesem Verfahren nicht erhalten werden. In der DE-AS 2 622 787 wird ein Verfahren zur gleichzeitigen interferometrischen Messung von Dicken oder Abständen in einer Vielzahl von dicht nebeneinanderliegenden Punkten, nicht aber zur Bestimmung der Neigungen der Objektfläche im Bereich dieser Punkte beschrieben.

In der DE-OS 2 500 798 wird eine Vorrichtung zur Messung von Längen, Winkeln oder optischen Konstanten nach dem Moiré-Streifen- bzw. dem Interferenzstreifenprinzip beschrieben, mit der entweder die Verschiebung eines Objekts oder der Brechungsindex von Substanzen gemessen werden kann. Aussagen über den Profilverlauf einer im Objektfeld befindlichen Fläche können mit dieser Vorrichtung ebenfalls nicht gemacht werden.

In der DE-AS 2 636 498 wird ein Verfahren zur interferometrischen Oberflächenmessung beschrieben, das sich von den üblichen interferometrischen Verfahren im wesentlichen dadurch unterscheidet, dass die Messstrahlung streifend auf das Messobjekt fällt, so dass auch nicht reflektierende Flächen untersucht werden können. Das dabei entstehende Interferenzlinienfeld besteht, wie bei allen bekannten Interferenz-Verfahren, aus Isohypsen. Das gleiche gilt auch für das in der DE-AS 2 636 211 beschriebene Verfahren, das sich von den bekannten Interferenz-Verfahren vor allem dadurch unterscheidet, dass das Auflösungsvermögen von $\lambda/2$ auf $\lambda/4$ erhöht ist. Angaben über die Neigung der Fläche in den einzelnen Objektpunkten müssen, wie bei allen bekannten interferometrischen Verfahren, durch Auswertung der Interferenzlinien errechnet werden. In der DE-AS 2 139 836 und der DE-AS 2 537 162 werden Verfahren zum berührungslosen Messen der Unebenheiten von Flächen nach dem Moiré-Prinzip beschrieben, mit denen unter Zuhilfenahme von Gitterstrukturen Isohypsenfelder erzeugt werden.

Auch die US-PS 3 943 278 beschreibt ein typisches Moiré-Verfahren, das Isohypsen liefert und dazu auf die Messoberfläche das Bild eines Gitters projiziert; dieses Gitter wird anschliessend von einem optischen System auf ein Auswertegitter abgebildet. Bei streuenden Oberflächen kann statt der Gitterprojektion ein Interferenzfeld aus zwei kohärenten, ebenen Wellen erzeugt werden, die sich unter einem kleinen Winkel im Bereich der Oberfläche überlagern und dort ein sichtbares Gittermuster durch Streuung erzeugen, das wieder auf das Auswertegitter abgebildet wird.

Wie oben ausgeführt, können mit allen bekannten Verfahren Aussagen über die genauen Beträge der Steigungen nur durch technisch und zeitlich aufwendige Kunstgriffe erhalten werden. Darüber hinaus liegt die Grenze des Auflösungsvermögens für Steigungen bei den bekannten Interferenz- und Moiré-Verfahren im allgemeinen bei Bogenminuten oder etwas darunter. Selbst bei Anwendung des in der obengenannten DE-AS 2 636 211 beschriebenen, besonders verfeinerten interferometrischen Verfahrens, mit dem die Grenze des Tiefenauflösungsvermögens bis $\lambda/4$ herabgesetzt wird, kann die Grenze des Auflösungsvermögens für Steigungen nur auf den halben Wert vermindert werden, ein Wert, der immer noch im Bereich der Grössenordnung von Bogenminuten liegt. Die Messgenauigkeit aller interferometrischer Verfahren kann zwar durch besondere, zum Teil sehr aufwendige Kunstgriffe, beispielsweise durch Verwendung von Mehrfarbeninterferometrie oder Komparatorverfahren, weiterhin gesteigert werden. Diese Kunstgriffe können aber nur bei Vorliegen besonderer Randbedingungen angewendet werden, so dass eine wesentliche Verbesserung des Auflösungsvermögens nur in wenigen Fällen möglich ist. Bei allen diesen Verfahren sind, wie oben dargestellt, die auftretenden Linien Isohypsen, so dass zur Ermittlung des Betrags der Neigungen besondere zeitaufwendige Verfahrensschritte erforderlich sind.

Der Erfindung liegt daher die Aufgabe zugrunde, ein Verfahren bzw. eine Vorrichtung zu schaffen, mit dem bzw. der die erste und die zweite Ableitung einer im wesentlichen ebenen Messobjektfläche unmittelbar ablesbar und mit extrem hoher Genauigkeit und Geschwindigkeit gemessen werden kann. Um auch grosse Flächen in kürzester Zeit untersuchen zu können, sollen relativ grosse Flächenbereiche gleichzeitig erfassbar sein. Zur Vereinfachung der Auswertung der Messergebnisse soll es weiterhin möglich sein, die Messung auf bestimmte Richtungen zu beschränken – bei der Messung einer rotationssymmetrischen Platte beispielsweise die radiale oder die tangentiale Richtung.

Diese Aufgabe wird durch die im Anspruch 1 bzw. 4 beschriebene Erfindung gelöst.

Mit dem erfindungsgemässen Verfahren wird nicht nur das Auflösungsvermögen gegenüber den bisher bekannten Verfahren der eingangs genannten Art wesentlich erhöht, sondern auch die Auswertung der Messergebnisse wesentlich erleichtert und beschleunigt, da anstelle der bei bekannten Verfahren erzeugten Isohypsen Isoklinen erzeugt werden, deren Abstände unmittelbar die zweite Ableitung der untersuchten Fläche darstellen. Ferner ist eine einfache und eindeutige Zuordnung der Messergebnisse zu den einzelnen Messpunkten selbst grosser Messflächen sichergestellt. Die Auswertung der Messergebnisse wird weiterhin dadurch ganz wesentlich erleichtert, dass die Messung der Steigungen und der Steigungsänderungen auf eine bestimmte vorgegebene Richtung beschränkt werden kann. Ein weiterer wesentlicher Vorteil der Erfindung besteht darin, dass der erforderliche technische Aufwand wesentlich geringer als bei allen vergleichbaren Verfahren ist. Das erfindungsgemässe Verfahren eignet sich aus trotz geringstem Raumbedarf der erforderlichen technischen Vorrichtungen besonders gut zur automatischen oder halbautomatischen Auswertung der Messergebnisse. Im Gegensatz zu den bekannten Verfahren können insbesondere bei sehr grossflächigen Unebenheiten Neigungswinkel gemessen werden, die um Zehnerpotenzen unter den bisher messbaren Neigungswinkeln liegen. Da bei der vorliegenden Erfindung über die zu prüfende Oberfläche nicht wie bei den bekannten Verfahren eine strukturierte Abbildung, sondern nur zwei parallele Strahlen bzw. ein Gitter zu übertragen sind, sind die Anforderungen an die Reflektivität der zu untersuchenden Oberfläche wesentlich niedriger, so dass auch relativ schlecht oder diffus reflektierende Flächen, beispielsweise beschichtete Platten, geprüft werden können. Ein weiterer Vorteil der vorliegenden Erfindung besteht ferner darin, dass bei einem vorgegebenen Auflösungsvermögen und einer vorgegebenen Apparatur die Unebenheiten nicht einen Mindestdurchmesser haben müssen, um erfasst werden zu können.

Ein Ausführungsbeispiel der Erfindung wird anschliessend anhand der Figuren näher erläutert.

Es zeigen:

Fig. 1 die schematische Darstellung von Strahlengängen, zur Erläuterung des Messverfahrens,

Fig. 2 die schematische Darstellung eines Ausführungsbeispiels der Erfindung,

Fig. 3 die Darstellung eines mit dem in Fig. 2 dargestellten Ausführungsbeispiel erzeugten Linienmusters,

Fig. 4 eine bevorzugte Parallelanordnung von Messfläche und Auswertegitter,

Fig. 5 eine Doppelspiegel-Anordnung zur Erzeugung zweier, einen kleinen Winkel miteinander einschliessenden Parallelstrahlenbündel,

Fig. 6 eine schematische Darstellung einer Anordnung zur Ebenheitsprüfung mit einem Doppelspiegel nach Fig. 5,

Fig. 7 ein Blockschaltbild einer automatisierten Auswerteinrichtung für Isoklinen-Muster.

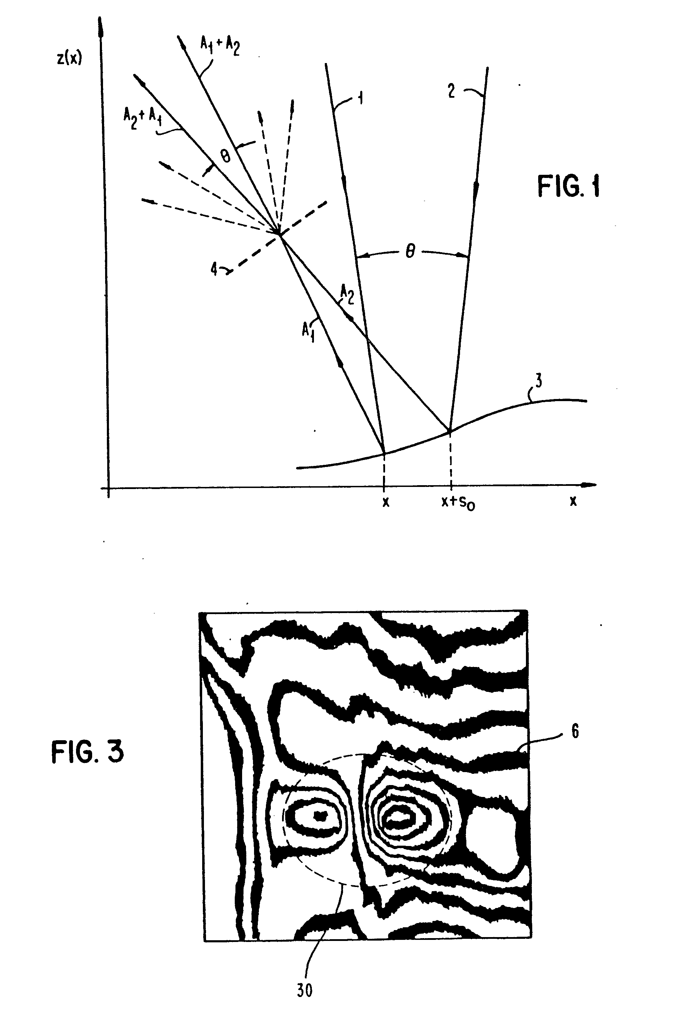

Gemäss Fig. 1 werden zwei durch die Linien 1 und 2 angedeutete, kohärente und kollimierte Laserlichtbündel, die einen Winkel $\theta$ miteinander einschliessen, an der Objektfläche 3 reflektiert und überlagern sich im Bereich eines Gitters 4 (Auswertegitter). Für kleine Steigungsänderungen an der Objektfläche 3 ist der Winkel, den die beiden Strahlungen $A_1$ und $A_2$ nach Reflexion an der Objektfläche miteinander bilden, praktisch unverändert gleich $\theta$. An dem Gitter 4 mit der Gitterkonstanten

$$(1) \qquad g = \frac{\lambda}{2 \sin \frac{\Theta}{2}} \approx \frac{\lambda}{\Theta}$$

entstehen dabei neben den Beugungsordnungen nullter Ordnung, deren Fortpflanzungsrichtungen identisch sind mit den Richtungen der beiden an der Objektfläche reflektierten Strahlungen $A_1$, $A_2$, auch höhere Beugungsordnungen. Bei geeigneter Wahl der durch die Gleichung (1) definierten Gitterkonstante verläuft zumindest ein Teil der durch die Strahlungen $A_1$ und $A_2$ erzeugten Beugungsordnungen in den gleichen Richtungen. Diese Beugungsordnungen interferieren miteinander, so dass in jeder Beugungsordnung identische Linienmuster entstehen. In der unmittelbaren Nähe der Gitterebene oder in der Gitterebene selbst fallen diese Muster zusammen, so dass dort ein einheitliches Liniensystem beobachtet werden kann. In einer etwas grösseren Entfernung vom Gitter entsteht eine Überlagerungsfigur der einzelnen Linienmuster und erst in einem hinreichend grossen Abstand können die einzelnen Beugungsfiguren wieder ungestört und getrennt beobachtet werden.

Zur Interpretation der Linienmuster werden aus den durch die Linien 1 und 2 angedeuteten Strahlenbündeln zwei durch diese Linien dargestellte Strahlen herausgegriffen, die an den Orten x und $x + s_o$ der durch die Funktion z(x) dargestellten Objektfläche 3 reflektiert werden und anschliessend am Gitter 4 zusammentreffen. Die komplexen Amplituden der Wellenzüge dieser beiden Strahlen können allgemein dargestellt werden in der Form:

$$(2) \qquad A_1 = A_o \cdot e^{-i\Phi_1}$$
$$A_2 = A_o \cdot e^{-i\Phi_2}$$

wobei $A_o$ die reellen Amplituden und $\varphi_1$, $\varphi_2$ die Phasen sind. Unter Vernachlässigung der Gitterbeugungsverluste entstehen durch Überlagerung der beiden durch die Gleichung (2) definierten Komponenten in jeder Beugungsordnung die Intensitäten:

$$(3) \qquad J = \frac{1}{2}|A_1 + A_2|^2 = A_o^2 \, (1 + \cos(\Phi_2 - \Phi_1)).$$

Intensitätsminima (Interferenzlinien) treten auf für:

$$(4)$$
$$\Delta\Phi = \Phi_2 - \Phi_1 = (2n+1)\pi \qquad (n = 0, \pm1, \pm2 \ldots)$$

Aufgrund der Reflexion an der Objektfläche entsteht die Phasendifferenz:

$$(5) \qquad \Delta\Phi = \frac{4\pi}{\lambda}\{ z(x+s_o) - z(x)\}$$

Damit geht die Bedingung (4) für das Auftreten dunkler Linien über in

$$(6) \qquad \frac{4\pi}{\lambda}\{z(x+s_o) - z(x)\} = (2n+1) \cdot \pi$$

oder

$$(7)$$
$$\frac{z(x+s_o) - z(x)}{s_o} = \frac{2n+1}{4s_o} \cdot \lambda \quad (n = 0, \pm1, \pm2 \ldots)$$

Die Gleichung (7) stellt für kleine Werte von $s_o$ den Differentialquotienten oder die Steigung der Funktion z(x) dar. Intensitätsminima entstehen für:

$$(8) \qquad \frac{dz}{dx} = \alpha = \frac{2n+1}{4\,s_o} \cdot \lambda \qquad (n = 0, \pm1, \pm2 \ldots)$$

Daraus folgt, dass die kleinste messbare Steigungsänderung, die zu einem Linienwechsel führt, gegeben ist durch

$$(9) \qquad \alpha_o = \frac{\lambda}{2\,s_o}$$

Ist der Abstand zwischen dem Gitter und der Objektfläche gegeben durch I, so geht Gleichung (9) mit Gleichung (1) über in

$$(10) \qquad \alpha_o = \frac{\lambda}{2\,s_o} = \frac{g}{2I}$$

wobei
    $s_o$ = Abstand zwischen den Messpunkten,
    $\lambda$ = die Wellenlänge und
    g = Gitterkonstante.

Die obigen Betrachtungen zeigen, dass das beschriebene Messverfahren ein Interferenzlinienmuster der Objektfläche liefert, in dem der Übergang von einer Interferenzlinie zu einer benachbarten Interferenzlinie der Steigungsänderung an dem entsprechenden Ort der Objektfläche entspricht, die durch Gleichung (10) definiert ist. Die flächenhafte Beleuchtung der Objektfläche führt zu einer flächenhaften Darstellung der Steigungen der Objektfläche in der Gitterebene. Da in der Praxis sehr kleine Oberflächenkrümmungen vorkommen, besteht zwischen dem Linienmuster in der Gitterebene und den entsprechenden Orten auf der Objektfläche eine eindeutige Zuordnung im Verhältnis 1:1. Das Linienmuster kann beispielsweise auf einer Mattscheibe beobachtet werden, die unmittelbar hinter dem Beugungsgitter angeordnet wird.

Eine andere, leichter verständliche, aber weniger allgemeine Interpretation der oben beschriebenen Gesetzmässigkeiten führt zum gleichen Ergebnis: Fasst man bei der Darstellung nach Fig. 1 die Objektfläche 3 als vollkommen eben auf, so entsteht im Bereich des Gitters 4 ein vollkommen gleichmässiges Interferenzlinienmuster. Wird ferner vorausgesetzt, dass die Abstände zwischen den Interferenzlinien gleich den Abständen zwischen den Gitterstäben sind, so wird in einer bestimmten Relativlage zwischen Gitter und Interferenzlinienmuster die gesamte Strahlung durchgelassen. Ist g die Gitterkonstante und I der Abstand zwischen Objektfläche und Gitter, so wird bei einer Kippung der Objektfläche um einen Winkel $\alpha_o/2$ das Interferenzlinienmuster um eine der halben Gitterkonstante gleiche Entfernung verschoben, wenn

$$\alpha_o/2 = \frac{g}{4I} \cdot$$

In diesem Fall tritt kein Licht durch das Gitter.

Entsprechend wird bei einer Kippung der bei den vorliegenden Überlegungen als vollkommen eben aufgefassten Objektfläche 3 um einen Winkel $\alpha_o$ das Interferenzstreifenmuster um eine einer ganzen Gitterkonstante g gleiche Entfernung verschoben, so dass die hellen Interferenzstreifen hinter dem Gitter wieder voll sichtbar werden. Es lässt sich leicht zeigen, dass bei Vorliegen von Unebenheiten in der Objektfläche 3, deren Neigungen ganzzahlige Vielfache von $\alpha_o$ aufweisen, hinter dem Gitter 4 ein Linienmuster auftritt, wobei eine Linie dieses Musters jeweils alle Punkte der Objektfläche 3 verbindet, die die Steigung $\alpha_o$ oder ein ganzzahliges Vielfaches davon aufweisen. Es ist leicht einzusehen, dass diese Linien Isoklinen sind, also der ersten Ableitung der Objektfläche 3 entsprechen, und dass die Liniendichte (Abstände zwischen diesen Linien) gleich der zweiten Ableitung der Objektfläche sind.

Anhand der oben erläuterten Gleichungen kann gezeigt werden, dass die seitliche Auflösung $s_o$

und die Winkelauflösung $\alpha_o$ unabhängig von der Gitterkonstante g und dem Abstand l sind. Der Abstand $\Delta s$ zwischen zwei aufeinanderfolgenden Interferenzlinien hinter dem Gitter 4 ist proportional der Neigung $\alpha_o$ des betreffenden Flächenabreichs

$$\Delta s = R \cdot \alpha_o,$$

wobei die Proportionalitätskonstante R der Definition des Krümmungsradius R entspricht:

$$R = \lim_{\Delta\alpha \to 0} \frac{\Delta s}{\Delta\alpha} \to \frac{s}{\alpha_o}$$

Da der Krümmungsradius der Oberfläche einer rotierenden Platte direkt proportional ist der Beschleunigung, die ein in einem kleinen, festen Abstand zu dieser Oberfläche auf dem entstehenden Luftpolster geführter Gegenstand, z.B. ein Magnetkopf erfährt, ist das erfindungsgemässe Verfahren in besonders vorteilhafter Weise bei der Prüfung von Magnetspeicherplatten zu verwenden.

Da die allgemeine Gleichung für den Krümmungsradius

$$R = \frac{(1+Z'^2)^{3/2}}{Z''}$$

mit $Z = Z(r, \varphi) = $ Oberflächenfunktion einer Magnetspeicherplatte
$Z' = $ erste Ableitung dieser Fläche
$Z'' = $ zweite Ableitung der Fläche
im Bereich von kleinen Steigungen beschrieben werden kann als

$$R = \frac{1}{Z''},$$

ist der Krümmungsradius in diesem Fall umgekehrt proportional der zweiten Ableitung der Plattenoberfläche; diese Verhältnisse liegen z.B. bei Magnetspeicherplatten vor.

Die Beziehung zwischen der zweiten Ableitung der Oberfläche und der Beschleunigung eines über eine rotierende Magnetspeicherplatte mit konstantem Abstand zwangsgeführten Magnetkopfes, nämlich

$$\ddot{Z} = \frac{\delta^2 Z}{\delta t^2}$$

wird definiert durch die Beziehung

$$Z'' = \frac{1}{\omega^2 r^2} \cdot \ddot{Z}$$

wobei r = Radius der Spur,
$\omega = 2\pi\nu$
$\nu = $ Rotationsfrequenz der Platte.
Es ist leicht einzusehen, dass bei vorgegebenen maximal zulässigen Beschleunigungen des Magnetkopfes $\ddot{Z} = \ddot{Z}_{max}$ mit Hilfe der vorhergehenden Gleichung eindeutige Angaben über den zulässigen Krümmungsradius und damit über die durch die Linienabstände des Interferenzfeldes definierte zweite Ableitung der Objektoberfläche berechnet werden können.

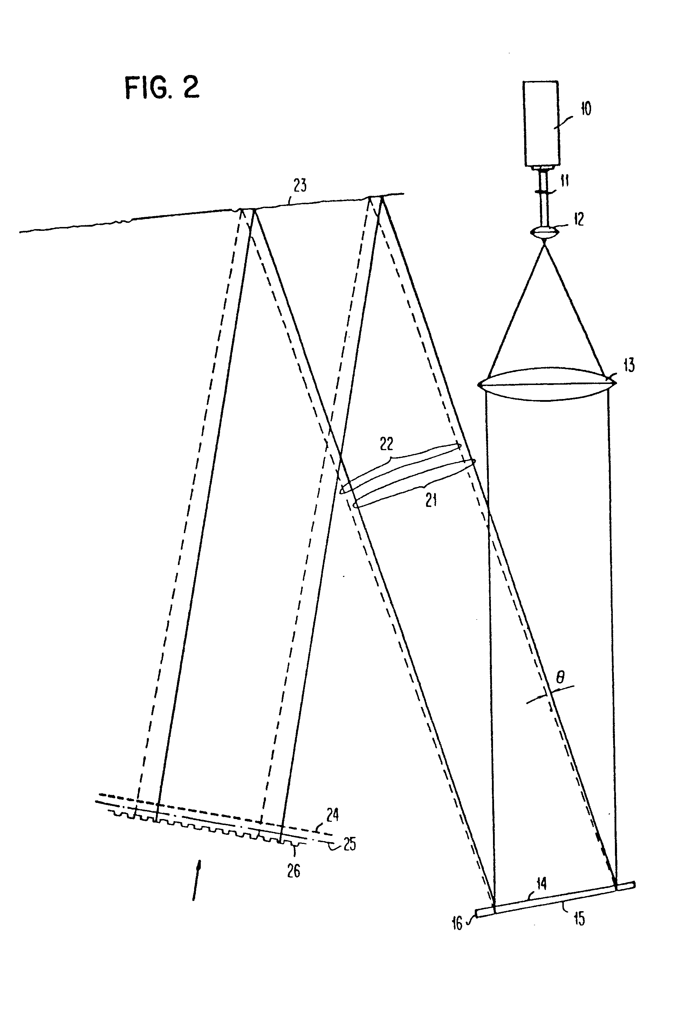

Mit dem beschriebenen Verfahren kann durch geeignete Ausrichtung der Prüffläche in bezug auf das vor der Auswertebene angeordnete Gitter und der durch die Strahlenbündel 21 und 22 (Fig. 2) erzeugten Interferenzlinien die Messung des Profilverlaufs auf eine bestimmte Richtung beschränkt werden, wodurch die Auswertung der erzeugten Linienfelder, beispielsweise bei der Prüfung der Unebenheiten von Magnetspeicherplatten, ausserordentlich erleichtert wird. In vielen Fällen ist es zweckmässig, die Gitterkonstante so klein zu wählen, dass die Gitterstruktur bei der Beobachtung oder der Auswertung nicht sichtbar ist. Auf diese Weise können die Linienmuster ohne Störung durch die Gitterlinien besonders gut ausgewertet werden.

Bei dem in Fig. 2 dargestellten Ausführungsbeispiel wird durch eine als Laser ausgebildete Lichtquelle 10 ein kohärenter Lichtstrahl 11 erzeugt, der in einem aus Linsen 12 und 13 bestehenden Linsensystem aufgeweitet wird. Der die Linse 13 verlassende kohärente und kollimierte Lichtstrahl wird an einem eine teilreflektierende vordere Fläche 14 und eine vollständig reflektierende hintere Fläche 15 aufweisenden Prisma 16 in zwei Strahlenbündel 21 und 22 aufgespalten, die miteinander einen Winkel $\theta$ bilden. Diese Strahlenbündel werden an einer zu prüfenden, beispielsweise den beschichteten Bereich einer Magnetspeicherplatte darstellenden Objektfläche 23 reflektiert und überlappen sich im Bereich einer Auswertebene 25. Das durch die Überlagerung der beiden kohärenten Lichtstrahlen 21 und 22 im Bereich der Auswertebene 25 entstehende Interferenzlinienmuster durchsetzt ein in dieser Ebene oder in unmittelbarer Nachbarschaft vor dieser Ebene angeordnetes Gitter 24, dessen Gitterkonstante etwa gleich den Abständen zwischen zwei benachbarten Linien des Interferenzlinienmusters ist. Wie im Zusammenhang mit der Beschreibung der Fig. 1 erläutert, entsteht, bedingt durch die bei der Reflexion an der Unebenheit aufweisenden Objektfläche 23 auftretenden Phasenunterschiede, hinter dem Gitter 24 ein Linienmuster, dessen Linien Isoklinen darstellen. Diese Linien stellen somit die ersten Ableitungen und die Abstände zwischen ihnen die zweiten Ableitungen der Objektfläche 23 dar. Die Auswertung kann entweder visuell oder über einen Fernsehmonitor erfolgen. In dem in Fig. 2 dargestellten Ausführungsbeispiel ist in der Auswertebene ein zweidimensionales Photodiodenarray 26 angeordnet. Die an den Ausgängen dieser Vorrichtung auftretenden elektrischen Signale enthalten genaue Informationen über den Verlauf der einzelnen Linien des hinter dem Gitter 24 auftretenden Lichtmusters und können zur weiteren Verarbeitung beispielsweise einem (nicht dargestellten) Computer zugeführt werden.

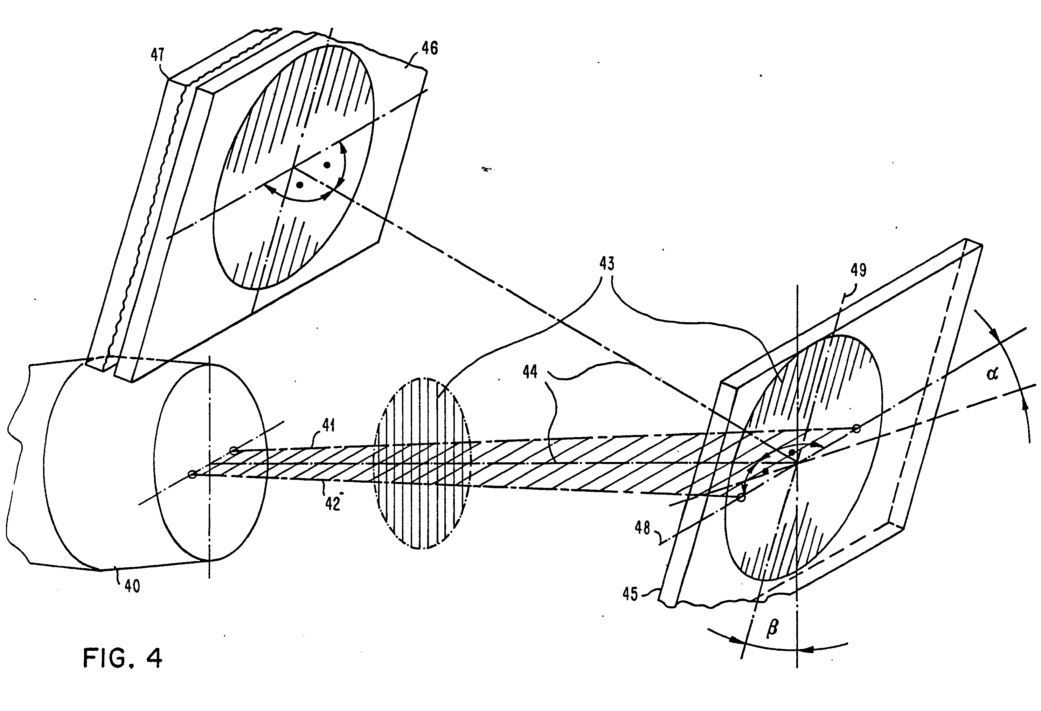

In Fig. 3 wird ein aus einer Vielzahl von Linien 6 bestehendes Lichtmuster wiedergegeben, wie es beispielsweise hinter dem Gitter 24 des in Fig. 2 dargestellten Ausführungsbeispiels der Erfindung auftritt. In dem gestrichelt abgegrenzten Gebiet 30 ist der Abstand zwischen benachbarten Isoklinen gering, entsprechend einer grossen lokalen Steigung der Oberfläche.

Da bei der vorliegenden Erfindung keinerlei abbildende Elemente erforderlich sind, können die Messergebnisse auch nicht durch Abbildungsfehler verfälscht werden.

Es ist selbstverständlich auch möglich, anstelle der oben beschriebenen Reflexionsmessungen Transmissionsmessungen durchzuführen, wobei dann im wesentlichen Dicken- oder Dichteänderungen erfasst werden.

Für die Auswertung der nach dem hier beschriebenen Verfahren erzeugten Isoklinen-Muster ist es aus praktischen Gründen notwendig, dass die Messauflösung über das gesamte Gesichtsfeld gleich bleibt; das erfordert eine genaue Parallelausrichtung zwischen der Messoberfläche 23 und dem Auswertegitter 24, da nach Gleichung (10) die Messauflösung von deren gegenseitigem Abstand I abhängt. Auch kleine relative Verkippungen von Messfläche und Auswertegitter führen zu einer Verfälschung der Messergebnisse (z.B. Verbiegung der Interferenzstreifen).

Die optische Anordnung mit der geringstmöglichen Empfindlichkeit gegen kleine Verkippungen von Messfläche und Auswertegitter liegt vor, wenn die Messfläche senkrecht beleuchtet wird. Zur Umlenkung des reflektierten Strahlenbündels muss jedoch in diesen Strahlengang eine teilverspiegelte Strahlenteilerplatte eingebracht werden, die ihrerseits zu Störungen des Wellenfelds und zu einem unerwünschten Lichtverlust führt.

In Fig. 4 ist eine Parallelanordnung von Messfläche 45 zu Auswertegitter 46 gezeigt, die bezüglich von Kippungen um Achsen senkrecht zu den Interferenzlinien 43 unempfindlich ist. Die aus der Strahlaufweitungsoptik 40 austretenden beiden Strahlenbündel mit (in einer Horizontalebene liegenden) Achsen 41 und 42 erzeugen senkrecht verlaufende Interferenzlinien 43, die mit den ebenfalls senkrecht angeordneten Linien des Gitters 46 die gewünschten Isoklinen auf einem Beobachtungsschirm 47 erzeugen. Die gemeinsame optische Achse der beiden Strahlenbündel 41 und 42 ist mit Bezugszeichen 44 gekennzeichnet. Infolge der senkrechten Orientierung der Gitterlinien 43 wirken sich Kippungen um kleine Winkel β bezüglich der horizontalen Achse 48 auf das Isoklinenbild nur sehr wenig aus; Kippwinkel α um Achsen 49 parallel zu den Interferenzlinien sich dagegen sehr störend und müssen durch entsprechend genaue Positionierung vermieden werden. ·

Eine weitere Voraussetzung zur Realisierung der hohen Messgenauigkeit des hier beschriebenen Verfahrens ist ein störungsfreies Interferenzfeld (43 in Fig. 4), dessen einzelne Interferenzlinien möglichst wenig Abweichungen von Geraden aufweisen. Da derartige Interferenzfelder nur durch Strahlenbündel mit ebenen Wellenfronten (Abweichungen ≦λ/10) entstehen, müssen an die optischen Bauelemente für Strahlenaufweitung (12 in Fig. 2), für die Kollimation des Strahlenbündels (13) und für die Aufspaltung in zwei Strahlenbündel (prismatische Platte 15) die höchsten Anforderungen gestellt werden.

Statt der in Fig. 2 gezeigten prismatischen Platte mit einem vorgeschalteten Kollimator kann auch ein mit zwei senkrecht zueinander verlaufenden divergenten Strahlenbündeln beaufschlagter Teilerwürfel mit nachgeschaltetem Kollimator verwendet werden, der bezüglich der Achsen der einfallenden Bündel leicht verkippt ist; diese Anordnung ist jedoch relativ schwer zu justieren.

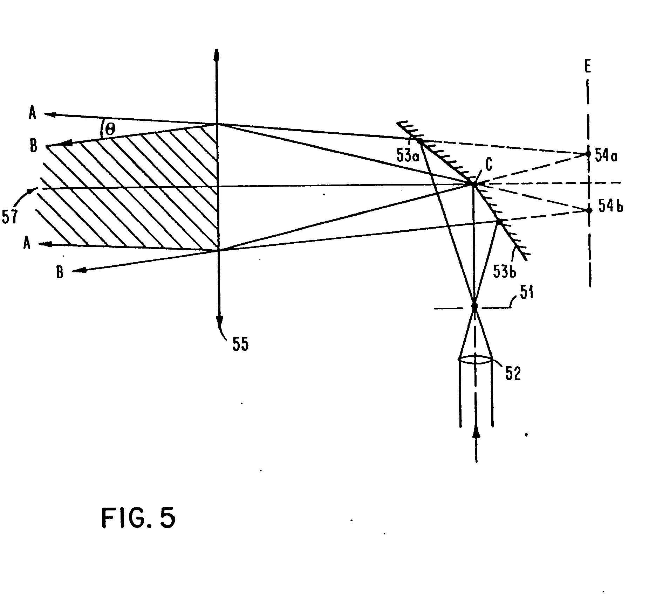

Fig. 5 zeigt ein einfaches und doch sehr genaues optisches System zur Erzeugung von nahezu störungsfreien Interferenzlinienfeldern in einem (schraffiert dargestellten) Überlappungsbereich 57. Eine Lochblende 51 ist im Brennpunkt einer Strahlaufweitungsoptik 52 angeordnet, deren optische Achse im Schnittpunkt C eines Doppelspiegels 53a, 53b liegt. Die Spiegel 53a, 53b spannen einen Winkel von fast 180° auf und können um ihren Schnittpunkt C gedreht werden. Ein Kollimator 55 ist so vor dem Doppelspiegel angeordnet, dass seine optische Achse durch den Schnittpunkt C verläuft und sein Brennpunkt mit Lochblende 51 zusammenfällt.

Der von Lochblende 51 ausgehende Lichtkegel wird an den Spiegeln 53a, 53b reflektiert und erzeugt so zwei virtuelle Lichtquellen 54a, 54b, die mit einem sehr geringen gegenseitigen Abstand in einer gemeinsamen Ebene E liegen. Die vom Kollimator 55 erzeugten Parallelstrahlenbündel A, B, die von diesen Lichtquellen ausgehen, schliessen einen Winkel θ ein, der entsprechend der Formel

$$g = \frac{\lambda}{2 \sin^{\Theta}/2}$$

gegeben wird, wobei g die Gitterkonstante des Interferenzfeldes im Überlappungsbereich 57 darstellt. Die Gitterkonstante des Interferenzfeldes kann auf einfache Weise durch Änderung des von den Spiegeln 53a, 53b eingeschlossenen Winkels eingestellt werden; die Richtung des Interferenzlinienfeldes ist durch Drehung des Doppelspiegels 53a, 53b um seine Achse c einstellbar.

Auf diese Weise lässt sich ein grossflächiges Interferenzfeld mit sehr geringen Verzerrungen erzeugen, das leicht zu justieren, unempfindlich gegen Schwingungen und von kompaktem Aufbau ist.

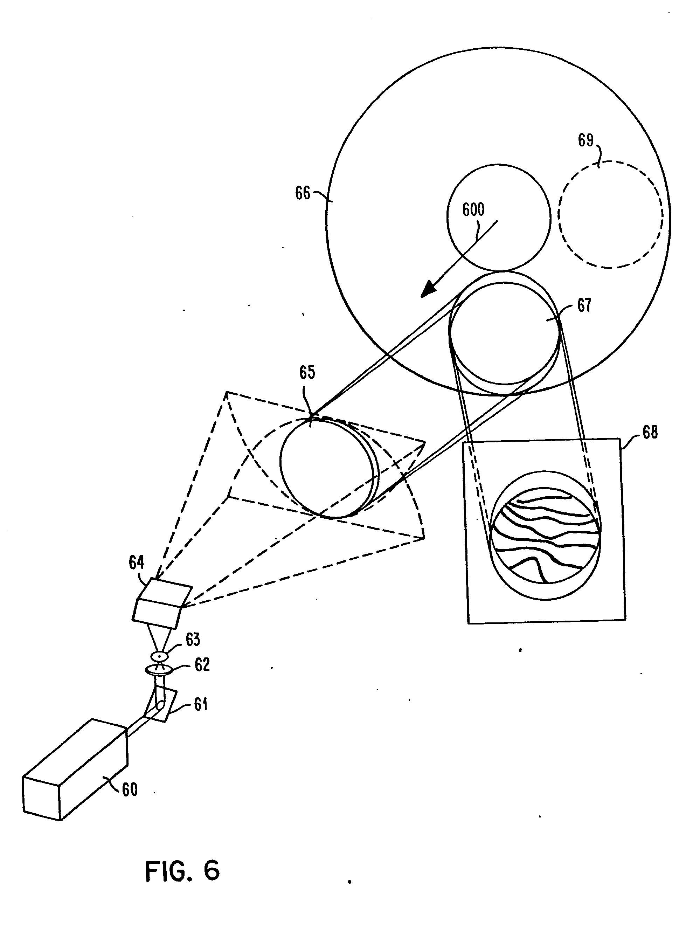

Fig. 6 zeigt den Aufbau einer vollständigen Anordnung zur interferometrischen Ebenheitsmessung mit einem Doppelspiegel nach Fig. 5. Das Ausgangsbündel eines Lasers 60 wird über einen Umlenkspiegel 61 und eine Sammellinse 62 in der Öffnung einer Lochblende 63 fokussiert und durch Doppelspiegel 64 in zwei Bündel aufgespalten, die einen geringen Winkel miteinander einschliessen und beispielsweise im Bereich 65, in dem eine Kollimatorlinse angeordnet ist, ein aus waagrecht orientierten Geraden bestehendes Interferenzfeld erzeugen. Mit diesem Interferenzfeld wird die zu prüfende Oberfläche, hier einer Magnetplatte 66, in einem Bereich 67 beleuchtet und das reflektierte Licht durch ein Auswertegitter 68 beobachtet.

Die entstehenden Isoklinen sind schematisch am Ort des Gitters 68 eingezeichnet. Bei der in Fig. 6 gewählten waagrechten Lage der Interferenzlinien wird die Oberfläche der Magnetplatte 66 in radialer Richtung geprüft (die Prüfrichtung liegt immer senkrecht zu der Orientierung der auf die Messfläche projizierten Interferenzlinien). Die Ebenheitsprüfung in tangentialer Richtung kann mit dem gleichen Aufbau erfolgen, wenn die Magnetplatte 66 unter einem Winkel von 45° nach unten (gemäss Pfeil 600) verschoben wird, bis die Beleuchtung im Bereich 69 erfolgt. In diesem Bereich 69 verlaufen die Interferenzlinien in radialer Richtung, so dass die Ebenheitsprüfung in tangentialer Richtung erfolgt. In jeder der beiden Stellungen von Platte 66 wird die gesamte Oberfläche abschnittsweise ausgemessen. Die Prüfung in zwei senkrecht zueinander verlaufenden Richtungen kann auch so vorgenommen werden, dass derselbe Plattenabschnitt ein zweites Mal beleuchtet wird, nachdem Doppelspiegel 64 und Auswertegitter 68 um 90° gedreht werden.

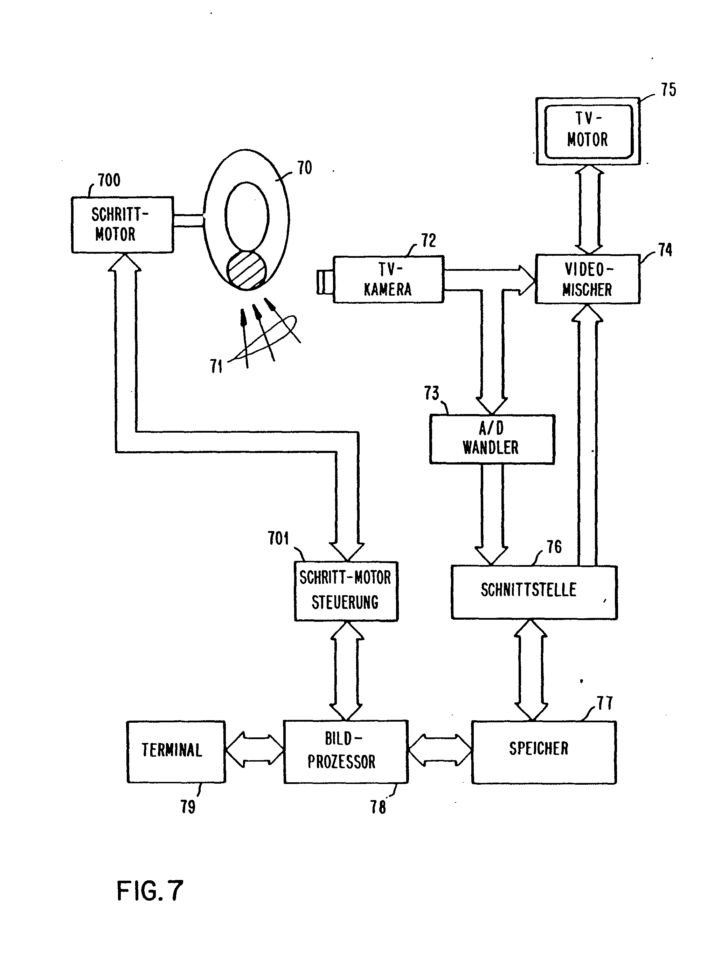

Fig. 7 zeigt in schematischer Weise die Bestandteile eines vollständigen Systems zur interferometrischen Ebenheitsmessung von Magnetplatten mit digitaler Bildverarbeitung. Der Prüfling 70 wird auf die in Fig. 6 gezeigte Weise mit zwei gegeneinander geneigten Strahlenbündeln 71 beleuchtet und die entstehenden Isoklinen mit einer Fernsehkamera 72 abgetastet. Zu diesem Zweck wird anstelle der hinter dem Gitter 68 angeordneten Mattscheibe eine Fresnellinse verwendet, die eine Abbildung der Isoklinen auf die photoempfindliche Fläche der Fernsehkamera bewirkt. Das Ausgangssignal der Fernsehkamera 72 wird einmal einem Videomischer 74 zugeführt, an den ein Fernsehmonitor 75 angeschlossen ist und zum andern einem Analog-Digital-Wandler 73, der das digitalisierte Bild über eine mit hoher Geschwindigkeit arbeitende Schnittstelle 76 in einen digitalen Speicher 77 gibt. Ein an den Speicher 77 angeschlossener Bildprozessor verarbeitet das digitale Bild und liefert es über den Speicher 77, die Schnittstelle 76 und den Videomischer 74 ebenfalls an den Fernsehmonitor 75. Das ursprüngliche und das verarbeitete Bild können somit gleichzeitig auf dem Fernsehmonitor 75 dargestellt werden. Zur Steuerung des Auswertesystems ist ein Terminal 79 an den Bildprozessor 78 angeschlossen; die abschnittsweise Fortschaltung der einzelnen zu prüfenden Abschnitte von Platte 70 erfolgt mit einem Schrittmotor 700 mit zugeordneter Steuereinheit 701.

Zur Erleichterung der Auswertung von Bildern nach Art der Fig. 3 bestimmt Bildprozessor 78 die Mittellinien (Schwerpunktlinien der Linienschwärzung = Zentrallinien) der Interferenzlinien 6 und ermittelt die Gebiete, in denen der Abstand zwischen zwei benachbarten Isoklinen kleiner als ein vorgegebenes Minimum ist. Diese Gebiete ergeben zusammen mit den Schwerpunktlinien ein synthetisches Bild, das dem von TV-Kamera 72 aufgenommenen Bild im TV-Monitor 75 überlagert wird.

Die Abtastung des Isoklinen-Musters kann auch mit einer Photodioden-Matrix vorgenommen werden.

Die Herstellung des Auswertegitters (z.B. 24; Fig. 2) kann mit Hilfe der hier beschriebenen Messvorrichtung so erfolgen, dass als Messfläche 23 ein vollkommener ebener Spiegel (z.B. Quecksilberoberfläche) verwendet wird, um das durch Beleuchtung mit den Messstrahlen 21, 22 entstehende Interferenzmuster holographisch-photographisch als Gitter zu registrieren.

Das Auswertegitter kann dabei mit geeigneten photoempfindlichen Materialien entweder als Amplitudengitter (z.B. schwarz-weiss moduliert) oder als Phasengitter (Brechungsindexänderung) registriert werden. Fehler der Messvorrichtung beeinflussen daher schon die Struktur des Auswertegitters und kompensieren sich dadurch zum Teil bei der späteren Messung von Prüfobjekten. Zur Überprüfung des Referenzgitters kann der ebene Spiegel, der zur Gitteraufnahme verwendet wurde, an der 45° Rampe (Pfeil 600 in Fig. 6) so fest angebracht werden, dass jederzeit zwischen den Einzelmessungen Kontrollmessungen erfolgen können. Wie aber die Erfahrung zeigt, sind selbst über monatelangen Messzeiten keine Fehler erkennbar.

**Patentansprüche**

1. Verfahren zur Ermittlung der ersten und zweiten Ableitung einer im wesentlichen ebenen Messobjektfläche als Funktion des Ortes auf dieser Fläche, dadurch gekennzeichnet, dass
— zwei kohärente, jeweils eine Wellenfronten aufweisende und einen kleinen Winkel einschliessende optische Strahlenbündel unter Bildung eines Interferenzfeldes überlagert werden,
— die überlagerten Strahlenbündel durch Reflexion an der Messobjektfläche einem zu dieser Fläche und zu den Interferenzlinien des Interferenzfeldes im wesentlichen parallel ausgerichteten Gitter zugeführt werden, dessen Gitterkonstante in der gleichen Grössenordnung wie die Abstände der Interferenzlinien des Interferenzfeldes liegt, und
— das von dem Gitter in einer unmittelbar dahinter liegenden Detektionsebene erzeugte Linienmuster bezüglich des Verlaufs der Isoklinen bildenden Linien dieses Musters sowie ihrer Abstände ausgewertet wird.

2. Verfahren nach Anspruch 1, dadurch gekennzeichnet, dass zur Bestimmung der Ableitung in zwei zueinander senkrechten Richtungen die Orientierung der Interferenzlinien des Interferenzfeldes und der Gitterlinien bezüglich der Messfläche um 90° gedreht wird.

3. Verfahren nach Anspruch 1 oder 2, dadurch gekennzeichnet, dass die Achsen beider Strahlenbündel mit der Normalen der Objektfläche einen Winkel einschliessen.

4. Vorrichtung zur Durchführung des Verfahrens nach Anspruch 1, gekennzeichnet durch
— eine Lichtquelle (10; 60),
— ein optisches System (12—16; 40; 51—55; 61—65) zur Erzeugung zweier kohärenter, jeweils ebene Wellenfronten aufweisender und einen kleinen Winkel miteinander einschliessender Strahlenbündel (21, 22) aus dem Licht der Lichtquelle und zur Überlagerung dieser Strahlenbündel,

– ein im Wege der an der Messobjektfläche (23; 45; 66; 70) reflektierten überlagerten Strahlenbündel angeordnetes Gitter (4; 24; 46; 68), das im wesentlichen parallel zu der Messobjektfläche sowie zu den Interferenzlinien des von den überlagerten Strahlenbündeln gebildeten Interferenzfeldes ausgerichtet ist und eine Gitterkonstante von der gleichen Grössenordnung wie die Abstände der genannten Interferenzlinien hat,

– Einrichtungen (26; 47; 72) zum Erfassen des von dem Gitter in einer unmittelbar hinter diesem liegenden Detektionsebene erzeugten Isoklinen-Linienmusters.

5. Vorrichtung nach Anspruch 4, dadurch gekennzeichnet, dass das optische System zur Erzeugung der Strahlenbündel eine Linse (12) mit einem nachgeschalteten Kollimator (13) enthält, sowie ein der Linse (12) nachgeschaltetes Prisma (16) mit einer teilreflektierenden vorderen Fläche (14) und einer vollständig reflektierenden hinteren Fläche (15).

6. Vorrichtung nach Anspruch 4, dadurch gekennzeichnet, dass das optische System zur Erzeugung des Strahlenbündels einen Doppelspiegel (53a, 53b) enthält, der zwei virtuelle Bilder (54a, 54b) einer beleuchteten Lochblende (51) erzeugt, die in der Brennebene eines Kollimators (55) liegen.

7. Vorrichtung nach einem der Ansprüche 4 bis 6, dadurch gekennzeichnet, dass zur visuellen Beobachtung hinter dem Auswertegitter (24) eine Mattscheibe angebracht ist.

8. Vorrichtung nach einem der Ansprüche 4 bis 6, dadurch gekennzeichnet, dass das Isoklinen-Muster hinter dem Auswertegitter (24) auf die Aufnahmefläche einer Fernsehkamera (72) abgebildet wird und dass eine automatische Auswertung des Musters erfolgt.

## Claims

1. Method for determining the first and the second derivative of a substantially planar surface of a sample as a function of the location on that surface, characterized in that

– two coherent optical beams including a small angle and each having a planar wave front are superimposed to form an interference field,

– the superimposed beams are guided by reflection at the sample surface to a grating aligned substantially in parallel to said surface and to the interference fringes of the interference field, the constant of said grating being in the same order as the distance between the fringes of the interference field, and

– that the fringe pattern generated by the grating in a detection plane immediately behind the grating is evaluated with respect to the course of the isoclines-forming fringes of this pattern and to their distances.

2. The method of claim 1, characterized in that for determining the derivative in two mutually orthogonal directions the orientation of the interference fringes of the interference field and of the grating lines is rotated by 90° with respect to the sample surface.

3. The method of claim 1 or 2, characterized in that the axes of both beams include an angle with the normal to the object surface.

4. Device for carrying out the method of claim 1, characterized by

– a light source (10; 60),

– an optical system (12–16; 40; 51–55; 61–65) for generating from the light of she light source two coherent beams (21, 22) including a small angle and each having a planar wave front and for super-positioning these beams,

– a grating (4; 24; 46; 68) arranged in the path of the superimposed beams reflected at the sample surface (23; 45; 66; 70), that grating being aligned substantially in parallel to the sample surface as well as to the fringes of the interference field produced by the superimposed beams, and having a grating constant of the same order as the distances between said interference fringes,

– devices (26; 47; 72) for recording the isocline fringe pattern generated by the grating in a detection plane immediately behind that grating.

5. The device of claim 4, characterized in that the optical system for generating the beams contains a lens (12) with a series-arranged collimator (13), and a prism (16) arranged in series to the lens (12), and having a partly reflecting front surface (14) and a fully reflecting back surface (15).

6. The device of claim 4, characterized in that the optical system for generating the beam comprises a double mirror (53a, 53b) which generates in the focal plane of a collimator (55) two virtual images (54a, 54b) of an illuminated pinholestop (51).

7. The device of one of the claims 4 to 6, characterized in that for visual observation a screen is provided behind the evaluator grating (24).

8. The device of one of the claims 4 to 6, characterized in that the isocline pattern behind the evaluator grating (24) is imaged onto the recording surface of a television camera, and that the pattern is automatically evaluated.

## Revendications

1. Procédé pour déterminer la dérivée première et la dérivée seconde d'une surface essentiellement plane d'un objet de mesurage, en fonction du lieu sur cette surface, caractérisé en ce que:

– on superpose deux faisceaux de rayonnement optique cohérents, possédant chacun un front d'onde plan et faisant entre eux un angle faible, avec formation d'un champ d'interférences,

– on envoie les faisceaux de rayonnement superposés, au moyen d'une réflexion au niveau de la surface de l'objet de mesurage, à une grille qui est orientée essentiellement parallèlement aux lignes d'interférence du champ d'interférences et dont le pas est du même ordre de grandeur que les distances entre les lignes d'interférence du champ d'interférences, et

— on évalue le modèle de lignes, qui est produit par la grille dans un plan de détection situé directement en arrière de cette grille, par rapport à l'allure des lignes de ce modèle, constituant des isoclines, ainsi que leurs distances.

2. Procédé selon la revendication 1, caractérisé en ce que pour déterminer la dérivée dans deux directions réciproquement perpendiculaires, on fait pivoter l'orientation des lignes d'interférence du champ d'interférences et les traits de réseau, de 90° par rapport à la surface de mesure.

3. Procédé selon la revendication 1 ou 2, caractérisé en ce que les axes des deux faisceaux de rayonnement font un angle avec la normale à la surface de l'objet.

4. Dispositif pour la mise en œuvre du procédé selon la revendication 1, caractérisé par:

— une source de lumière (10; 60),

— un système optique (12–16; 40; 51–55; 61–65) servant à produire deux faisceaux de rayonnement cohérents (21, 22), possédant chacun un front d'onde plan et faisant entre eux un angle faible, à partir de la lumière délivrée par la source de lumière, et servant à superposer ces deux faisceaux de rayonnement,

— une grille (4; 46; 68) disposée sur le trajet des faisceaux de rayonnement superposés réfléchis au niveau de la surface (23; 45; 66; 70) de l'objet de mesurage et qui est orientée de manière à être essentiellement parallèle à la surface de l'objet de mesurage ainsi qu'aux lignes d'interférence du champ d'interférences formé par les faisceaux de rayonnement superposés, et possède un pas du même ordre de grandeur que les distances entre lesdites lignes d'interférences,

— des dispositifs (26; 47; 72) servant à détecter le modèle de lignes isoclines produites par la grille dans un plan de détection situé directement à l'arrière de cette dernière.

5. Dispositif selon la revendication 4, caractérisé en ce que le système optique servant à produire les faisceaux de rayonnement contient une lentille (12) en aval de laquelle est disposé un collimateur (13), ainsi qu'un prisme (16) disposé en aval de la lentille (12) et possédant une surface avant semi-réfléchissante (14) et une surface arrière (15) totalement réfléchissante.

6. Dispositif selon la revendication 4, caractérisé en ce que le système optique servant à produire le faisceau de rayonnement contient un miroir double (53a, 53b), qui forme deux images virtuelles (54a, 54b) d'un diaphragme éclairé (51), qui sont situées dans le plan focal d'un collimateur (55).

7. Dispositif selon l'une des revendications 4 à 6, caractérisé en ce que, pour l'observation visuelle, un verre dépoli est placé derrière la grille d'évaluation (24).

8. Dispositif selon l'une des revendications 4 à 6, caractérisé en ce que le modèle d'isoclines derrière la grille d'évaluation (24) est formé sur la surface photosensible d'une caméra de télévision (72), une évaluation automatique du modèle étant ainsi effectuée.

FIG. 1

FIG. 3

# FIG. 2

FIG. 4

FIG. 5

FIG. 6

FIG.7